# EUROPEAN PATENT APPLICATION

(11) **EP 4 841 686 A1**
(43) Date of publication of application: **18.11.2026**
(21) Application number: 24916771.9
(22) Date of filing: 27.12.2024
(51) Int. Cl.: H01M 4/13, H01M 4/66, H01M 10/0525, H01M 50/586, H01M 50/593, H01M 50/536, H01M 50/538

(54) **ELECTRODE SHEET AND SECONDARY BATTERY**

(30) Priority: 08.01.2024 CN 202410027115
(71) Applicant: Ningde Amperex Technology Limited, Ningde, Fujian 352100 (CN)
(72) Inventor: YAN, Jiaxiao, Ningde, Fujian 352100 (CN); LV, Fang, Ningde, Fujian 352100 (CN); LIU, Zhaozhao, Ningde, Fujian 352100 (CN); QU, Changming, Ningde, Fujian 352100 (CN)
(74) Representative: Kraus & Lederer PartGmbB
(86) International application number: PCT/CN2024/143293
(87) International publication number: WO 2025/148724

(57) **Abstract**

An electrode sheet (10) and a secondary battery are provided, including a current collector (11), a first insulating layer (12), a second insulating layer (13), a first adapting portion (14a), and a second adapting portion (14b). The current collector (11) includes a first metal layer (112), a polymer layer (111), and a second metal layer (113) arranged in sequence. The first metal layer (112) has a first surface (1121) facing away from the polymer layer (111), and the second metal layer (113) has a second surface (1131) facing away from the polymer layer (111). Along a width direction of the current collector (11), the current collector (11) includes a coated segment (11a) and an uncoated segment (11b) connected to each other. The first insulating layer (12) is disposed on the first surface (1121), extending from the coated segment (11a) to the uncoated segment (11b). The second insulating layer (13) is disposed on the second surface (1131), extending from the coated segment (11a) to the uncoated segment (11b). The first adapting portion (14a) is electrically connected to the current collector (11) on the first surface (1121) of the uncoated segment (11b), with a distance of L1 mm between the first adapting portion (14a) and the first insulating layer (12), where 0 mm ≤ L1 ≤ 1 mm. The second adapting portion (14b) is electrically connected to the current collector (11) on the second surface (1131) of the uncoated segment (11b), with a distance of L2 mm between the second adapting portion (14b) and the second insulating layer (13), where 0 mm ≤ L2 ≤ 1 mm, reducing the occurrence of burrs on the metal layers piercing a separator (20), thereby lowering the risk of short circuit in the battery.

## Description

### CROSS-REFERENCE TO RELATED APPLICATIONS

This application claims priority to Chinese Patent Application No. 202410027115.3, filed with the China National Intellectual Property Administration on January 8, 2024, and entitled "ELECTRODE SHEET AND SECONDARY BATTERY", which is incorporated herein by reference in its entirety.

### TECHNICAL FIELD

Embodiments of this application relate to the field of electrochemical technologies, and in particular, to an electrode sheet and a secondary battery.

### BACKGROUND

With the continuous update and development of battery technologies, the application fields of batteries are also expanding, and the accompanying battery safety problems are getting more and more public attention. Safety accidents, such as thermal runaway caused by mechanical damage to batteries, occur frequently, which brings certain resistance to the development of batteries. How battery safety problems are resolved is a critical challenge at present. The safety protection methods for a conventional battery generally focus on delaying thermal runaway, and it is difficult to resolve the safety problems caused by mechanical damage of the battery, resulting in significant limitations in application.

A composite current collector (Metal polymer film, MPF) includes a composite structure of metal layer-polymer layer-metal layer. Using a polymer as a mechanical performance framework of the current collector can reduce a thickness of the metal layer, leading to a certain weight reduction and an increase in the gravimetric energy density of the battery. However, during the manufacturing process of a battery, a polymer material is difficult to achieve fusion bonding with a tab, leading to issues such as rosin joint or over-welding after the tab is welded to the current collector, affecting the overall electrical performance of the battery and welding reliability. Additionally, a portion of burrs on the current collector can easily pierce a separator of the battery, leading to short circuit caused by contact between positive and negative electrodes.

### SUMMARY

Embodiments of this application are intended to provide an electrode sheet and a secondary battery, which can reduce the piercing of a separator by burrs on a current collector, thereby reducing the occurrence of short circuit in the battery.

To resolve the technical problem, some embodiments of this application adopt the following technical solution:
According to a first aspect, this application provides an electrode sheet, including a current collector, a first insulating layer, a second insulating layer, a first adapting portion, and a second adapting portion. Along a thickness direction of the current collector, the current collector includes a first metal layer, a polymer layer, and a second metal layer arranged in sequence. The first metal layer has a first surface facing away from the polymer layer, and the second metal layer has a second surface facing away from the polymer layer. Along a width direction of the current collector, the current collector includes a coated segment and an uncoated segment connected to each other. The first insulating layer is disposed on a side of the first surface of the first metal layer, where a portion of the first insulating layer is disposed on the coated segment, and another portion is disposed on the uncoated segment. The first adapting portion is electrically connected to the current collector on a first surface of the uncoated segment, where a distance between the first adapting portion and the first insulating layer is L₁ mm, and 0 mm ≤ L₁ ≤ 1 mm.

In the above technical solution, the first adapting portion is electrically connected to the first metal layer, and the first insulating layer partially covers the uncoated segment, so that the strength of the uncoated segment can be enhanced, reducing deformation or tearing of the uncoated segment and improving the mechanical damage resistance of the electrode sheet. A distance between the first adapting portion and the first insulating layer is defined as L₁ mm, where 0 mm ≤ L₁ ≤ 1 mm, and the occurrence of burrs piercing the separator close to the first metal layer can be effectively reduced, thereby lowering the risk of short circuit in the battery.

In some preferred embodiments, the electrode sheet further includes a second insulating layer, and the second insulating layer is disposed on a side of the second surface of the second metal layer, where a portion of the second insulating layer is disposed on the coated segment, and another portion is disposed on the uncoated segment. The second adapting portion is electrically connected to the current collector on a second surface of the uncoated segment, where a distance between the second adapting portion and the second insulating layer is L₂ mm, and 0 mm ≤ L₂ ≤ 1 mm.

In the above technical solution, the first adapting portion and the second adapting portion are provided, so that the first adapting portion is electrically connected to the first metal layer of the current collector, and the second adapting portion is electrically connected to the second metal layer of the current collector. The configuration of dual-sided electrical connection can improve the reliability of the electrical connection between two adapting portions and the current collector, mitigating the issue of poor fusion bonding between a polymer material and the adapting portions. Additionally, a distance between the second adapting portion and the second insulating layer is defined as L₂ mm, where 0 mm ≤ L₂ ≤ 1 mm, and the occurrence of burrs piercing the separator can be further reduced, thereby lowering the risk of short circuit in the battery.

In some preferred embodiments, 0 mm ≤ L₁ ≤ 0.5 mm, and 0 mm ≤ L₂ ≤ 0.5 mm, further ensuring that the first insulating layer and the second insulating layer cover the burrs on the uncoated segment, reducing the occurrence of burrs piercing the separator.

In some preferred embodiments, the electrode sheet further includes at least two welding portions, and the welding portions are electrically connected to the first adapting portion and the second adapting portion, ensuring good contact between the first adapting portion and the second adapting portion to achieve dual-sided electrical connection. Additionally, at least one welding portion is electrically connected to the current collector to improve current-carrying capacity.

In some preferred embodiments, along the width direction of the current collector, a distance between the welding portion and the first insulating layer or the second insulating layer is L₃ mm, where 0 mm ≤ L₃ ≤ 1 mm, L₃ > L₁, and L₃ > L₂, and the defined welding portion is located on the two adapting portions, ensuring welding reliability.

In some preferred embodiments, a first surface of the coated segment is provided with a first coating, the first insulating layer is bonded to the first coating and the first surface of the uncoated segment, and a first active material layer is disposed on a surface of the first coating facing away from the coated segment, effectively protecting the first metal layer of the current collector from being pierced by sharp particles of the first active material layer, ensuring the integrity of the conductive network of the current collector. A second surface of the coated segment is provided with a second coating, the second insulating layer is bonded to the second coating and the second surface of the uncoated segment, and a second active material layer is disposed on a surface of the second coating facing away from the coated segment, effectively protecting the second metal layer of the current collector from being pierced by sharp particles of the second active material layer, ensuring the integrity of the conductive network of the current collector.

In some preferred embodiments, the first coating has a first section disposed close to the uncoated segment, where the first section is not provided with the first active material layer, and along the width direction of the current collector, a length of the first section is L₄ mm, where 1 mm ≤ L₄ ≤ 1.8 mm, reducing the occurrence of the portion of the current collector not provided with the active material layer piercing the separator close to the first metal layer, thereby reducing the occurrence of short circuit. For a second section of the second coating, disposed close to the uncoated segment, the second section is not provided with the second active material layer, and along the width direction of the current collector, the length of the second section is L₅ mm, where 1 mm ≤ L₅ ≤ 1.8 mm, reducing the occurrence of the portion of the current collector not provided with the active material layer piercing the separator close to the second metal layer.

In some preferred embodiments, the first coating and/or the second coating includes inorganic ceramics, insulating organic polymers, and conductive particles. The inorganic ceramics include at least one of aluminum oxide, boehmite, silicon dioxide, calcite, magnesite, barium sulfate, lead sulfate, calcium sulfate, or copper sulfate. The insulating organic polymers include at least one of polyethylene, polypropylene, polybutene, polypentene, polyhexene, polyvinyl alcohol, polyacrylamide, polyester fiber, polyvinyl alcohol-polyester, polyethylene glycol ester, polycaprolactone, polybutylene succinate, polyether ester, polycarbonate, or rubber. The conductive particles include carbon black, graphene, or acetylene black.

In some preferred embodiments, along the thickness direction of the current collector, a thickness of the current collector is T₁ µm, where 4 µm ≤ T₁ ≤ 20 µm; and optionally, a thickness of the first coating is T₂ µm, where 0.5 µm ≤ T₂ ≤ 4 µm, effectively protecting the first metal layer of the current collector from being pierced by sharp particles of the first active material layer, ensuring the integrity of the conductive network of the current collector. Optionally, a thickness of the second coating is T₃ µm, where 0.5 µm ≤ T₃ ≤ 4 µm, effectively protecting the second metal layer of the current collector from being pierced by sharp particles of the second active material layer, ensuring the integrity of the conductive network of the current collector. Optionally, a thickness of the first adapting portion is T₄ µm, where 8 µm ≤ T₄ ≤ 15 µm; and optionally, the thickness of the second adapting portion is T₅ µm, where 6 µm ≤ T₅ ≤ 10 µm. The thickness range is defined to ensure the strength of the first adapting portion. For example, when the first adapting portion is welded to the uncoated segment, the welding strength can be ensured, improving the welding stability. Moreover, the resistance thereof is smaller, improving the current-carrying capacity of the first adapting portion.

In some preferred embodiments, along the thickness direction of the current collector, a thickness of the welding portion is T₆ µm, where 20 µm ≤ T₆ ≤ 50 µm, ensuring the strength of the welding portion to stably connect the first adapting portion to the second adapting portion, ensuring good contact between the first adapting portion and the second adapting portion.

Optionally, along the width direction of the current collector, the width of the uncoated segment is W₁ mm, where 1 mm ≤ W₁ ≤ 5 mm, providing sufficient connection area for fixing the first adapting portion to the uncoated segment while reducing the occurrence of burrs piercing the separator.

Optionally, along the width direction of the current collector, a width of a single welding portion is W₂ mm, where 1 mm ≤ W₂ ≤ 3 mm, ensuring good contact between the first adapting portion and the second adapting portion, improving electrical connection stability and current-carrying capacity.

In some preferred embodiments, the electrode sheet further includes a first adhesive layer and a second adhesive layer. The first adhesive layer is disposed on a surface of the first adapting portion facing away from the second adapting portion, where the first adhesive layer can cover some burrs of the first adapting portion, reducing the occurrence of burrs piercing the separator close to the first metal layer. When viewed along a direction from the first adhesive layer to the first adapting portion, the first adhesive layer covers the welding portion. The first adhesive layer can protect a welding region between the welding portion and the first adapting portion, ensuring insulation in the region, and the first adhesive layer covering some burrs of the welding portion can further reduce the occurrence of burrs piercing the separator close to the first metal layer.

The second adhesive layer is disposed on a surface of the second adapting portion facing away from the first adapting portion, where the second adhesive layer can cover some burrs of the second adapting portion, reducing the occurrence of burrs piercing the separator close to the second metal layer. When viewed along a direction from the second adhesive layer to the second adapting portion, the second adhesive layer covers the welding portion. The second adhesive layer can protect the welding region between the welding portion and the second adapting portion, ensuring insulation in the region, and the second adhesive layer covering some burrs of the welding portion can further reduce the occurrence of burrs piercing the separator close to the second metal layer.

In some preferred embodiments, the first adhesive layer is bonded to the first insulating layer, and the second adhesive layer is bonded to the second insulating layer, such that the exposed first metal layer and second metal layer of the uncoated segment are completely electrically isolated. This not only reduces the occurrence of short circuit but also enhances the tear resistance of the uncoated segment.

In some preferred embodiments, along the width direction of the current collector, a width of the first adhesive layer is W₃ mm, where 1.2 mm ≤ W₃ ≤ 5 mm, ensuring that the first adhesive layer covers the welding portion while facilitating bonding with the first insulating layer.

Optionally, along the width direction of the current collector, a width of the second adhesive layer is W₄ mm, where 1.2 mm ≤ W₄ ≤ 5 mm, ensuring that the second adhesive layer covers the welding portion while facilitating bonding with the second insulating layer.

Optionally, along the thickness direction of the current collector, a thickness of the first adhesive layer is T₇ µm, where 5 µm ≤ T₇ ≤ 40 µm, ensuring stable bonding while reducing the occurrence of burrs piercing the first adhesive layer, maximally minimizing the space occupied by the first adhesive layer, and improving the volumetric energy density of the battery.

Optionally, along the thickness direction of the current collector, a thickness of the second adhesive layer is T₈ µm, where 5 µm ≤ T₈ ≤ 30 µm, ensuring stable bonding while ensuring stable coverage of burrs, maximally minimizing the space occupied by the first adhesive layer, and improving the volumetric energy density of the battery.

In some preferred embodiments, the first adhesive layer and/or the second adhesive layer includes polyolefin hot-melt adhesive, where the polyolefin hot-melt adhesive is resistant to electrolyte corrosion, which can improve the service life of the battery and bonding reliability.

In some preferred embodiments, along the thickness direction of the current collector, a thickness of the first insulating layer is T₉ µm, where 15 µm ≤ T₉ ≤ 40 µm, so as to sufficiently isolate some burrs of the first metal layer. A thickness of the second insulating layer is T₁₀ µm, where 15 µm ≤ T₁₀ ≤ 40 µm, so as to sufficiently isolate some burrs of the second metal layer. Along the width direction of the current collector, a width of the first insulating layer is W₅ mm, where 1.5 mm ≤ W₅ ≤ 4 mm, ensuring insulation of the uncoated segment and reducing internal short circuit in the battery. A width of the second insulating layer is W₆ mm, where 1.5 mm ≤ W₆ ≤ 4 mm, further reducing internal short circuit in the battery.

In some preferred embodiments, 0.1 mm ≤ W₅ - W₆ ≤ 0.5 mm, ensuring consistency on two sides of the current collector in the thickness direction and reducing crimping damage to the current collector by the first insulating layer and the second insulating layer during cold pressing.

According to a second aspect, this application further provides a secondary battery, including the electrode sheet according to any embodiment of the first aspect.

### BRIEF DESCRIPTION OF DRAWINGS

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a schematic diagram of a wound structure of an electrode assembly according to some embodiments of this application;
FIG. 2 is a schematic diagram of a stacked structure of an electrode assembly according to some embodiments of this application;
FIG. 3 is a schematic structural diagram of an electrode sheet according to some embodiments of this application;
FIG. 4 is a schematic structural diagram of a current collector according to some embodiments of this application;
FIG. 5 is a partial enlarged view of position A in FIG. 3;
FIG. 6 is a schematic structural diagram of an electrode sheet according to some embodiments of this application;
FIG. 7 is a schematic structural diagram of an electrode sheet according to some embodiments of this application;
FIG. 8 is a schematic structural diagram of an electrode sheet according to some embodiments of this application;
FIG. 9 is a partial enlarged view of position B in FIG. 8;
FIG. 10 is a schematic structural diagram of an electrode sheet according to some embodiments of this application; and
FIG. 11 is a schematic structural diagram of an electrode sheet according to some embodiments of this application.

### Reference Signs:

100. electrode assembly;
10a. positive electrode sheet; 10b. negative electrode sheet;
20. separator;
10. electrode sheet;
11. current collector; 11a. coated segment; 11b. uncoated segment; 111. polymer layer; 112. first metal layer; 1121. first surface; 113. second metal layer; 1131. second surface;
12. first insulating layer;
13. second insulating layer;
14a. first adapting portion; 14b. second adapting portion;
15a. first active material layer; 15b. second active material layer;
16. welding portion;
17a. first coating; 17a1. first section; 17b. second coating; 17b1. second section;
18a. first adhesive layer; 18b. second adhesive layer;
X. first direction; and Y. second direction.

### DETIALED DESCRIPTION

The following describes in detail embodiments of technical solutions of this application with reference to the accompanying drawings. The following embodiments are merely intended for a clearer description of the technical solutions of this application and therefore are merely used as examples which do not constitute any limitation on the protection scope of this application.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically defined.

In the description of some embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this document generally indicates an "or" relationship between the contextually associated objects.

In this specification, reference to "embodiment" means that specific features, structures, or characteristics described with reference to the embodiment may be included in at least one embodiment of this application. The term "embodiment" appearing in various places in the specification does not necessarily refer to the same embodiment or an independent or alternative embodiment that is exclusive of other embodiments. In addition, technical features involved in different embodiments of this application that are described below may be combined as long as they do not conflict with each other.

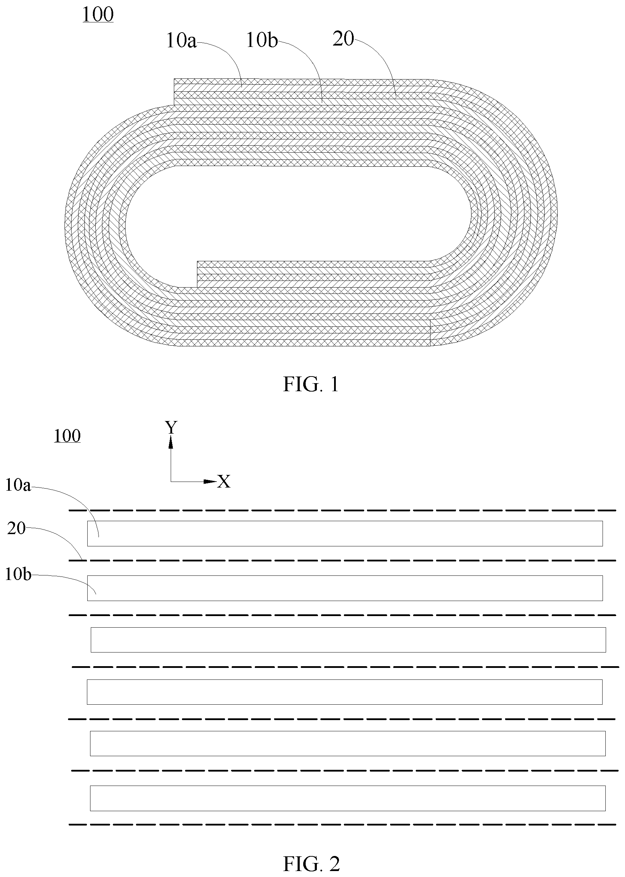

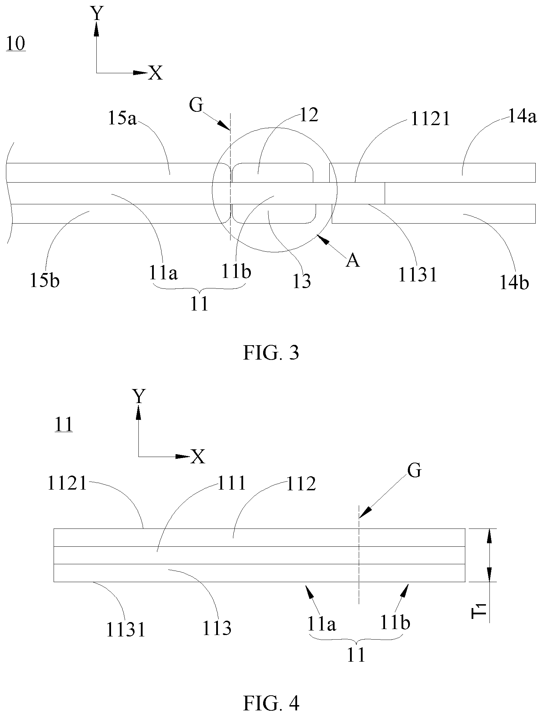

According to a first aspect, some embodiments of this application provide an electrode sheet 10, and the electrode sheet 10 is an important component inside a battery. For example, the electrode sheet 10 is divided into a positive electrode sheet 10a and a negative electrode sheet 10b. Referring to FIG. 1, a separator 20 is disposed between the positive electrode sheet 10a and the negative electrode sheet 10b. The positive electrode sheet 10a, the separator 20, and the negative electrode sheet 10b are stacked and then wound to obtain an electrode assembly 100, the electrode assembly 100 is accommodated in a housing (not shown in the figure), and an electrolyte is injected and then packaged to form a battery. Alternatively, referring to FIG. 2, the positive electrode sheet 10a and the negative electrode sheet 10b are stacked sequentially and alternately, a separator 20 is disposed between adjacent positive electrode sheet 10a and negative electrode sheet 10b to form an electrode assembly 100, the electrode assembly 100 is accommodated in the housing, and the electrolyte is injected and then packaged to form a battery. In some embodiments of this application, taking the electrode sheet 10 as a positive electrode sheet 10a as an example, referring to FIG. 3, the electrode sheet 10 includes a current collector 11, a first insulating layer 12, a second insulating layer 13, a first adapting portion 14a, and a second adapting portion 14b. In some other embodiments, the electrode sheet 10 may also be a negative electrode sheet 10b.

Regarding the current collector 11, the current collector 11 is a component used to collect and transmit the current generated inside the battery and is generally made of conductive materials such as copper, aluminum, or nickel. In some embodiments of this application, a composite current collector 11 may be used. Referring to FIG. 3 and FIG. 4, along a thickness direction (a second direction Y) of the current collector 11, the current collector 11 includes a first metal layer 112, a polymer layer 111, and a second metal layer 113 stacked in sequence. A thickness of the current collector 11 may be set to be T₁ µm, where 4 ≤ T₁ ≤ 20, reducing the space occupied by the current collector 11, facilitating improving the volumetric energy density of the battery while ensuring sufficient thickness to enhance the strength of the current collector 11 for ease of processing and forming of the current collector 11.

The polymer layer 111 is located between the first metal layer 112 and the second metal layer 113, the polymer layer 111 is used as the mechanical performance framework of the current collector 11, allowing the first metal layer 112 and the second metal layer 113 to be appropriately thinned, resulting in a certain weight reduction and improving the gravimetric energy density of the battery. Additionally, the thinning of the metal layers reduces the metal burrs generated when the battery is subjected to mechanical damage, reducing the occurrence of burrs piercing the separator 20, thereby reducing the risk of internal short circuit failure in the battery. Due to the superior deformability and extensibility of the polymer compared to metal, the composite current collector 11 exhibits better impact resistance and offers a wider operating space during processing, so that the composite current collector 11 can balance multiple advantages such as weight reduction, increased energy density, battery mechanical safety, and processing. A light and thin polymer film may be used as the polymer layer 111. For example, the material of the polymer layer 111 may be selected from one or more of polyethylene terephthalate, polyethylene, polypropylene, polyamide, polyimide, polyvinyl chloride, or polystyrene. Using such materials for the polymer layer 111 can reduce the overall weight of the composite current collector 11 and improve the gravimetric energy density of the battery.

The first metal layer 112 may be deposited on a surface of the polymer layer 111 by methods such as vacuum evaporation, vacuum coating, electroplating, or magnetron sputtering. To facilitate the deposition of the first metal layer 112, the material of the first metal layer 112 may be aluminum or an aluminum alloy with a lower boiling point. For example, an aluminum material or an aluminum alloy material is heated in a vacuum to vaporize and deposit on the surface of the polymer layer 111, making the surface of the polymer layer 111 conductive. The second metal layer 113 may be deposited on another surface of the polymer layer 111 using a similar method.

The first metal layer 112 has a first surface 1121 facing away from the polymer layer 111, where the first surface 1121 may be provided with a first active material layer 15a, and the coating weight of the first active material layer 15a may be selected as (100 to 400 mg) / 1540.25 mm² to ensure a high energy density of the battery. Similarly, the second metal layer 113 has a second surface 1131 facing away from the polymer layer 111, where the second surface 1131 may be provided with a second active material layer 15b. Exemplarily, along the width direction (a first direction X) of the current collector 11, the current collector 11 includes a coated segment 11a and an uncoated segment 11b connected to each other (the coated segment 11a and the uncoated segment 11b are separated by a dashed line G in the figure). The first active material layer 15a may be disposed on the coated segment 11a of the first surface 1121, and the second active material layer 15b may be disposed on the coated segment 11a of the second surface 1131. The uncoated segment 11b is the portion of the current collector 11 not provided with an active material layer, where the uncoated segment 11b of the first surface 1121 exposes the first metal layer 112 for electrical connection with the first adapting portion 14a, and the uncoated segment 11b of the second surface 1131 exposes the second metal layer 113 for electrical connection with the second adapting portion 14b.

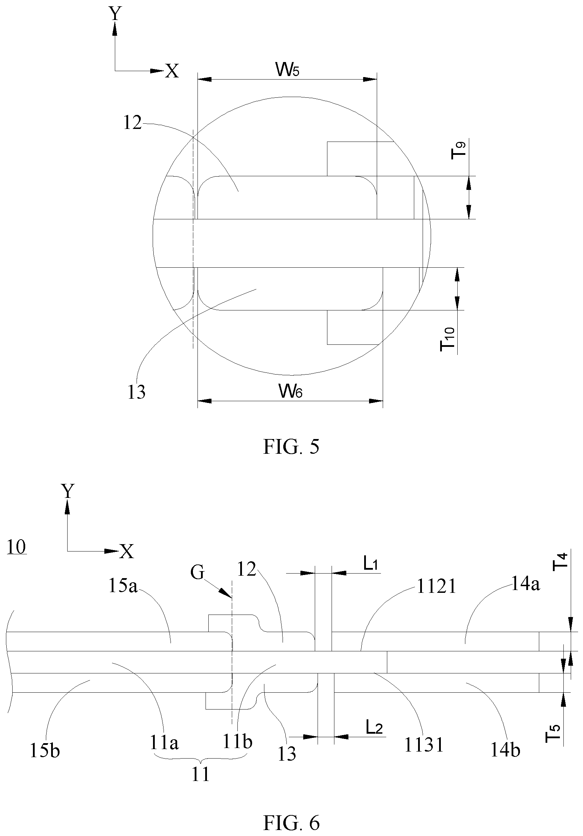

Regarding the first insulating layer 12, referring to FIG. 3 and FIG. 5, the first insulating layer 12 is disposed on a side of the first surface 1121 of the first metal layer 112, where a portion of the first insulating layer 12 is disposed on the coated segment 11a, and another portion is disposed on the uncoated segment 11b. For example, the first insulating layer 12 may be bonded to a portion of the first active material layer 15a and the uncoated segment 11b (referring to FIG. 6), or the first insulating layer 12 may be bonded only to the uncoated segment 11b (referring to FIG. 3). The first insulating layer 12 partially covers the uncoated segment 11b, enhancing the strength of the uncoated segment 11b and reducing deformation and tearing of the uncoated segment 11b. Additionally, the first insulating layer 12 can cover some burrs of the first metal layer 112, reducing the occurrence of burrs piercing the separator close to the first metal layer 112 when the electrode sheet 10 is assembled into a battery, thereby reducing short circuit in the battery. Along the thickness direction (the second direction Y) of the current collector 11, a thickness of the first insulating layer 12 is T₉ µm, where 15 µm ≤ T₉ ≤ 40 µm, so as to sufficiently isolate some burrs of the first metal layer 112. The first insulating layer 12 may use a polyolefin hot-melt adhesive, and the polyolefin hot-melt adhesive is resistant to electrolyte corrosion, so that corrosion damage to the first insulating layer 12 can be reduced, improving the lifespan of the electrode sheet 10 or battery. In some other embodiments, the first insulating layer 12 may also use pressure-sensitive adhesive or other insulation tapes.

Regarding the second insulating layer 13, referring to FIG. 3 and FIG. 5, the second insulating layer 13 is disposed on a side of the second surface 1131 of the second metal layer 113, where a portion of the second insulating layer 13 is disposed on the coated segment 11a, and another portion is disposed on the uncoated segment 11b. For example, the second insulating layer 13 may be bonded to a portion of the second active material layer 15b and the uncoated segment 11b, or the second insulating layer 12 may be bonded only to the uncoated segment 311b, further enhancing the strength of the uncoated segment 11b and reducing deformation and tearing of the uncoated segment 11b. Additionally, the second insulating layer 13 covers some burrs of the second metal layer 113, reducing the occurrence of burrs piercing the separator 20 close to the second metal layer 113, thereby reducing short circuit in the battery. Along the thickness direction (the second direction Y) of the current collector 11, a thickness of the second insulating layer 13 is T₁₀ µm, where 15 µm ≤ T₁₀ ≤ 40 µm, so as to sufficiently isolate some burrs of the second metal layer 113. Similar to the first insulating layer 12, the second insulating layer 13 may also use a polyolefin hot-melt adhesive to reduce corrosion damage to the second insulating layer 13. The second insulating layer 13 may also use pressure-sensitive adhesive or other insulation tapes.

Optionally, along the width direction (the first direction X) of the current collector 11, a width of the first insulating layer 12 is W₅ mm, where 1.5 mm ≤ W₅ ≤ 4 mm, ensuring insulation of the uncoated segment 11b and reducing internal short circuit in the battery. Similarly, a width of the second insulating layer 13 is W₆ mm, where 1.5 mm ≤ W₆ ≤ 4 mm. Preferably, 0.1 mm ≤ W₅ - W₆ ≤ 0.5 mm. For example, when viewed along the thickness direction (the second direction Y) of the current collector 11, the misalignment size between the first insulating layer 12 and the second insulating layer 13 is 0.1 to 0.5 mm, ensuring consistency on two sides of the current collector 11 in the thickness direction and reducing crimping damage to the current collector 11 by the first insulating layer 12 and the second insulating layer 13 during cold pressing.

Regarding the first adapting portion 14a, referring to FIG. 6, the first adapting portion 14a is electrically connected to the current collector 11 on the first surface 1121 of the uncoated segment 11b. For example, the first adapting portion 14a is electrically connected to the uncoated segment 11b through welding, bonding with conductive adhesive, or the like. The material of the first adapting portion 14a may be conductive materials such as aluminum, aluminum alloy, copper, or nickel. The first adapting portion 14a may be connected to an external circuit for charging and discharging. A distance between the first adapting portion 14a and the first insulating layer 12 is L₁ mm, where 0 mm ≤ L₁ ≤ 1 mm. The first insulating layer 12 covers the burrs of the uncoated segment 11b, reducing the occurrence of burrs piercing the separator 20 in the battery. In some embodiments of this application, the distance between the first adapting portion 14a and the first insulating layer 12 is defined as L₁ mm, so that the occurrence of burrs piercing the separator can be effectively reduced, thereby lowering the risk of short circuit in the battery. To facilitate the electrical connection between the first adapting portion 14a and the uncoated segment 11b, along the width direction (the first direction X) of the current collector 11, a width of the uncoated segment 11b is W₁ mm, where 1 mm ≤ W₁ ≤ 5 mm, providing sufficient connection area for fixing the first adapting portion 14a to the uncoated segment 11b while reducing the occurrence of burrs piercing the separator. Further, 0 ≤ L₁ ≤ 0.5, further ensuring that the first insulating layer 12 covers the burrs of the uncoated segment 11b, reducing the occurrence of burrs piercing the separator.

Optionally, along the thickness direction (the second direction Y) of the current collector 11, a thickness of the first adapting portion 14a is T₄ µm, where 8 µm ≤ T₄ ≤ 15 µm. The thickness range is defined to ensure the strength of the first adapting portion 14a. For example, when the first adapting portion 14a is welded to the uncoated segment 11b, the welding strength can be ensured, improving the welding stability. Moreover, the resistance thereof is smaller, improving the current-carrying capacity of the first adapting portion 14a.

Regarding the second adapting portion 14b, referring to FIG. 6, the second adapting portion 14b is electrically connected to the current collector 11 on the second surface 1131 of the uncoated segment 11b. Similar to the first adapting portion 14a, the second adapting portion 14b may also be made of conductive materials such as aluminum, aluminum alloy, copper, or nickel. Both the first adapting portion 14a and the second adapting portion 14b may be connected to an external circuit simultaneously. The configuration of two adapting portions can improve current-carrying capacity, facilitating high-rate charging and discharging. A distance between the second adapting portion 14b and the second insulating layer 13 is L₂ mm, where 0 mm ≤ L₂ ≤ 1 mm. The distance between the second adapting portion 14b and the second insulating layer 13 is defined as L₂ mm, further reducing the occurrence of burrs piercing the separator, thereby lowering the risk of short circuit in the battery. Further, 0 ≤ L₂ ≤ 0.5. Optionally, along the thickness direction (the second direction Y) of the current collector 11, a thickness of the second adapting portion 14b is T₅ µm, where 6 µm ≤ T₅ ≤ 10 µm, improving the current-carrying capacity of the second adapting portion 14b while enhancing the strength of the second adapting portion 14b.

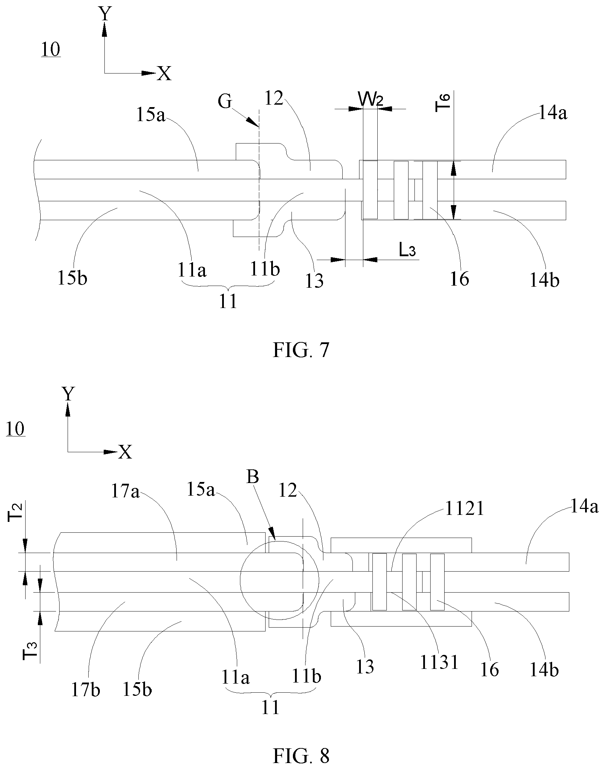

Referring to FIG. 7, in some embodiments, the electrode sheet 10 further includes at least two welding portions 16, where the welding portions 16 are electrically connected to the first adapting portion 14a and the second adapting portion 14b, and at least one welding portion 16 is electrically connected to the current collector 11. The welding portion 16 may be made of an aluminum strip, a copper strip, or a nickel strip, and one end of the welding portion 16 may be welded to the first adapting portion 14a and the another end to the second adapting portion 14b through roll welding, ensuring good contact between the first adapting portion 14a and the second adapting portion 14b to achieve dual-sided electrical connection, and at least one welding portion 16 is electrically connected to the current collector 11 to improve current-carrying capacity. Along the thickness direction (the second direction Y) of the current collector 11, a thickness of the welding portion 16 is T₆ µm, where 20 µm ≤ T₆ ≤ 50 µm, ensuring the strength of the welding portion 16 to stably connect the first adapting portion 14a and the second adapting portion 14b, and ensuring good contact between the first adapting portion 14a and the second adapting portion 14b. Along the width direction (the first direction X) of the current collector 11, a width of a single welding portion 16 is W₂ mm, where 1 mm ≤ W₂ ≤ 3 mm, ensuring good contact between the first adapting portion 14a and the second adapting portion 14b, improving electrical connection stability and current-carrying capacity.

Preferably, a distance between the welding portion 16 and the first insulating layer 12 and/or the second insulating layer 13 is defined as L₃ mm, where 0 mm ≤ L₃ ≤ 1 mm, reducing the occurrence of burrs on the uncoated segment 11b piercing the separator 20, where L₃ > L₁ and L₃ > L₂, and the defined welding portion 16 is located on the two adapting portions, ensuring welding reliability.

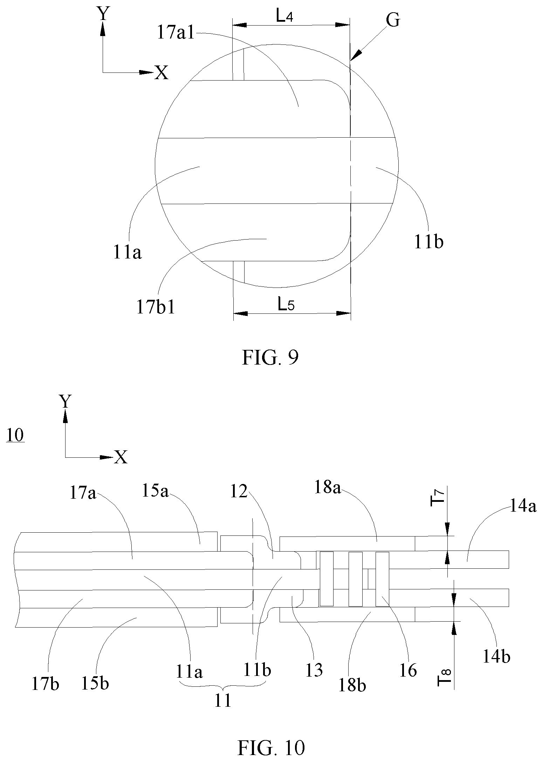

Referring to FIG. 8 and FIG. 9, in some embodiments, the first surface 1121 of the coated segment 11a is further provided with a first coating 17a, and the first active material layer 15a may be disposed on a surface of the first coating 17a facing away from the coated segment 11a. Along the thickness direction (the second direction Y) of the current collector 11, a thickness of the first coating 17a may be set to T₂ µm, where 0.5 µm ≤ T₂ ≤ 4 µm, effectively protecting the first metal layer 112 of the current collector 11 from being pierced by sharp particles of the first active material layer 15a, ensuring the integrity of the conductive network of the current collector 11. The first insulating layer 12 is bonded to the first coating 17a and the first surface 1121 of the uncoated segment 11b. For example, the first coating 17a protrudes toward the uncoated segment 11b with a first section 17a1, where the first section 17a1 is not provided with the first active material layer 15a, and the first insulating layer 12 may be bonded to the first section 17a1 and the first surface 1121 of the uncoated segment 11b, providing sufficient connection area to enhance the connection strength of the first insulating layer 12. The end of the first section 17a1 facing the first adapting portion 14a may be set to a smooth arc shape, ensuring a smooth transition of the first insulating layer 12 from the uncoated segment 11b to the first section 17a1, reducing bubbles and wrinkles, and enhancing the bonding strength between the first insulating layer 12 and the first section 17a1.

Similarly, the second surface 1131 of the coated segment 11a may also be provided with a second coating 17b, and the second active material layer 15b may be disposed on a surface of the first coating 17a facing away from the coated segment 11a. Along the thickness direction (the second direction Y) of the current collector 11, the thickness of the second coating 17b is T₃ µm, where 0.5 µm ≤ T₃ ≤ 4 µm, effectively protecting the second metal layer 113 of the current collector 11 from being pierced by sharp particles of the second active material layer 15b, ensuring the integrity of the conductive network of the current collector 11. The second insulating layer 13 is bonded to the second coating 17b and the second surface 1131 of the uncoated segment 11b. For example, the second coating 17b protrudes toward the uncoated segment 11b with a second section 17b1, where the second section 17b1 is not provided with the second active material layer 15b, and the second insulating layer 13 may be bonded to the second section 17b1 and the second surface 1131 of the uncoated segment 11b, ensuring the connection area of the second insulating layer 13.

Preferably, along the width direction (the first direction X) of the current collector 11, a length of the first section 17a1 is L₄ mm, where 1 mm ≤ L₄ ≤ 1.8 mm. The first section 17a1 protrudes a sufficient length to reduce the occurrence of the portion of the current collector 11 not provided with the active material layer piercing the separator close to the first metal layer 112, thereby reducing the occurrence of short circuit. Similarly, the length of the second section 17b1 is L₅ mm, where 1 mm ≤ L₅ ≤ 1.8 mm, reducing the occurrence of the portion of the current collector 11 not provided with the active material layer piercing the separator close to the second metal layer 113. When viewed along the thickness direction (the second direction Y) of the current collector 11, the first section 17a1 and the second section 17b1 are misaligned by 0 to 0.2 mm. The misalignment range is defined to ensure consistency in the electrical connection process of the first adapting portion 14a and the second adapting portion 14b. Excessive misalignment may lead to inconsistent electrical connection between the first adapting portion 14a and the second adapting portion 14b and the uncoated segment 11b. For example, the first adapting portion 14a is electrically connected to the first metal layer 112 while the second adapting portion 14b is electrically connected to the second coating 17b.

Regarding the material of the first coating 17a and the second coating 17b, the first coating 17a and/or the second coating 17b includes inorganic ceramics, insulating organic polymers, and conductive particles. The inorganic ceramics include at least one of aluminum oxide, boehmite, silicon dioxide, calcite, magnesite, barium sulfate, lead sulfate, calcium sulfate, or copper sulfate. The insulating organic polymers include at least one of polyethylene, polypropylene, polybutene, polypentene, polyhexene, polyvinyl alcohol, polyacrylamide, polyester fiber, polyvinyl alcohol-polyester, polyethylene glycol ester, polycaprolactone, polybutylene succinate, polyether ester, polycarbonate, or rubber. The conductive particles include conductive carbon or conductive carbon nanotubes, such as carbon black, graphene, or acetylene black.

Referring to FIG. 10, in some embodiments, the electrode sheet 10 further includes a first adhesive layer 18a, where the first adhesive layer 18a is disposed on a surface of the first adapting portion 14a facing away from the second adapting portion 14b, and the first adhesive layer 18a can cover some burrs of the first adapting portion 14a, reducing the occurrence of burrs piercing the separator 20 close to the first metal layer 112. Along the thickness direction (the second direction Y) of the current collector 11, a thickness of the first adhesive layer 18a is T₇ µm, where 5 µm ≤ T₇ ≤ 40 µm, ensuring stable bonding while reducing the occurrence of burrs piercing the first adhesive layer 18a, maximally minimizing the space occupied by the first adhesive layer 18a, and improving the volumetric energy density of the battery.

When viewed along a direction (a direction opposite to the second direction Y) from the first adhesive layer 18a to the first adapting portion 14a, the first adhesive layer 18a covers the welding portion 16. The first adhesive layer 18a can protect the welding region between the welding portion 16 and the first adapting portion 14a, ensuring insulation in the region, and the first adhesive layer 18a covering some burrs of the welding portion 16 can further reduce the occurrence of burrs piercing the separator 20 close to the first metal layer 112. The material of the first adhesive layer 18a may be a polyolefin hot-melt adhesive, and the polyolefin hot-melt adhesive is resistant to electrolyte corrosion, improving the service life of the battery and bonding reliability. In some other embodiments, the first adhesive layer 18a may also use a swellable hot-melt adhesive.

Optionally, the first adhesive layer 18a may further include inorganic salt pigments, such as blue, red, green, or other bright colors. When the first adhesive layer 18a is disposed on the first adapting portion 14a, whether there is a leakage coating can be identified by CCD visual, ensuring the integrity of the first adhesive layer 18a.

In some embodiments, the electrode sheet 10 further includes a second adhesive layer 18b, where the second adhesive layer 18b is disposed on a surface of the second adapting portion 14b facing away from the first adapting portion 14a, and the second adhesive layer 18b can cover some burrs of the second adapting portion 14b, reducing the occurrence of burrs piercing the separator 20 close to the second metal layer 113. Along the thickness direction (the second direction Y) of the current collector 11, a thickness of the second adhesive layer 18b is T₈ µm, where 5 µm ≤ T₈ ≤ 30 µm, ensuring stable bonding while ensuring stable coverage of burrs, maximally minimizing the space occupied by the first adhesive layer 18a, and improving the volumetric energy density of the battery. It should be noted that as shown in FIG. 10, the first adhesive layer 18a is located above the current collector 11, and burrs are more likely to pierce the first adhesive layer 18a under gravity, while the second adhesive layer 18b below does not have this issue or has a lower probability of occurrence. Therefore, the thickness of the second adhesive layer 18b may be set slightly smaller than the thickness of the first adhesive layer 18a to fully improve the volumetric energy density of the battery.

When viewed along a direction (the second direction Y) from the second adhesive layer 18b to the second adapting portion 14b, the second adhesive layer 18b covers the welding portion 16. The second adhesive layer 18b can protect the welding region between the welding portion 16 and the second adapting portion 14b, ensuring insulation in the region, and the second adhesive layer 18b covering some burrs of the welding portion 16 can further reduce the occurrence of burrs piercing the separator 20 close to the second metal layer 113. Similar to the first adhesive layer 18a, the material of the second adhesive layer 18b may also be a polyolefin hot-melt adhesive to improve the service life of the battery.

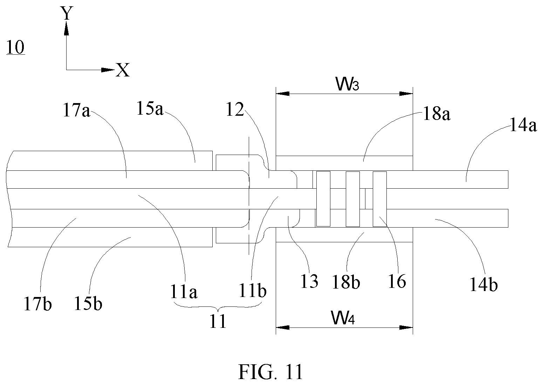

Preferably, referring to FIG. 11, the first adhesive layer 18a is bonded to the first insulating layer 12, completely electrically isolating the exposed first metal layer 112 of the uncoated segment 11b. This not only reduces the occurrence of short circuit but also enhances the tear resistance of the uncoated segment 11b. Along the width direction (the first direction X) of the current collector 11, a width of the first adhesive layer 18a is W₃ mm, where 1.2 mm ≤ W₃ ≤ 5 mm, facilitating bonding with the first insulating layer 12 while ensuring that the first adhesive layer 18a covers the welding portion 16. Similarly, the second adhesive layer 18b is bonded to the second insulating layer 13, completely insulating the exposed second metal layer 113 of the uncoated segment 11b, further reducing the occurrence of short circuit and enhancing the tear resistance of the uncoated segment 11b. Along the width direction (the first direction X) of the current collector 11, a width of the second adhesive layer 18b is W₄ mm, where 1.2 mm ≤ W₄ ≤ 5 mm, facilitating bonding with the second insulating layer 13 while ensuring that the second adhesive layer 18b covers the welding portion 16.

In the embodiments of this application, by providing the first adapting portion 14a and the second adapting portion 14b, where the first adapting portion 14a is electrically connected to the first metal layer 112 of the current collector 11, and the second adapting portion 14b is electrically connected to the second metal layer 113 of the current collector 11. The configuration of dual-sided electrical connection can enhance the reliability of the electrical connection between the two adapting portions and the current collector 11, mitigating the issue of poor fusion bonding between the polymer material and the adapting portions. Additionally, the first insulating layer 12 partially covers the uncoated segment 11b, enhancing the strength of the uncoated segment 11b, reducing deformation or tearing of the uncoated segment 11b, and improving the mechanical damage resistance of the electrode sheet 10. Furthermore, the distance between the first adapting portion 14a and the first insulating layer 12 is defined as L₁ mm, where 0 mm ≤ L₁ ≤ 1 mm, effectively reducing the occurrence of burrs piercing the separator 20 close to the first metal layer 112. The distance between the second adapting portion 14b and the second insulating layer 13 is defined as L₂ mm, where 0 mm ≤ L₂ ≤ 1 mm, further reducing the occurrence of burrs piercing the separator 20, thereby lowering the risk of short circuit in the battery.

According to a second aspect, some embodiments of this application further provide a secondary battery, including the electrode sheet according to any embodiment of the first aspect.

In some embodiments of this application, a lithium-ion battery is taken as an example for drop testing.

### Example 1

### Preparation of lithium-ion battery

(1) Preparation of positive electrode sheet: A positive electrode active material lithium cobalt oxide (LiCoO₂), carbon black (Super P), and polyvinylidene fluoride (PVDF) were mixed at a weight ratio of 97.5:1.0:1.5, and N-methylpyrrolidone (NMP) was added as a solvent, to prepare a slurry with a solid content of 75 wt%, and the slurry was stirred to uniformity.

Polyethylene terephthalate was selected as the polymer layer, and aluminum material was vapor-deposited on two surfaces of the polymer layer to form the first metal layer and the second metal layer. The slurry was applied onto the surface of the first metal layer, leaving a positive electrode uncoated segment, and the uncoated segment had a width W₁ of 3 mm. The slurry was dried to obtain a positive electrode sheet with one surface coated with an active material layer. The same steps were repeated on the second metal layer to obtain a positive electrode sheet with two surfaces coated with positive electrode active material layers.

(2) Preparation of negative electrode sheet: Graphite was used as a negative electrode active material. A negative electrode active material graphite, a binder styrene-butadiene rubber (SBR), and a thickener sodium carboxymethyl cellulose (CMC) were mixed at a weight ratio of 96:2:2, and deionized water was added as a solvent, to prepare a slurry with a solid content of 70 wt%, and the slurry was stirred to uniformity.

Copper foil was selected as the negative electrode current collector, and the slurry was uniformly applied onto one surface of the copper foil, leaving a negative electrode uncoated segment. The slurry was dried to obtain a negative electrode sheet with one surface coated with a negative electrode active material layer. The same steps were repeated on another surface of the copper foil to obtain a negative electrode sheet with two surfaces coated with positive electrode active material layers.

(3) Preparation of electrolyte: In a dry argon atmosphere, first, ethylene carbonate (EC), ethyl methyl carbonate (EMC), and diethyl carbonate (DEC) were mixed at a mass ratio of EC:EMC:DEC = 30:50:20 to form a base organic solvent, and then lithium hexafluorophosphate (LiPF₆) was added into the base organic solvent for dissolving and mixing to uniformly, to obtain an electrolyte with a mass concentration of LiPF₆ being 12.5%.

(4) Preparation of separator: A polyethylene porous film was used as a substrate layer, and a ceramic layer containing aluminum oxide ceramic and PVDF binder was applied onto one side of the substrate layer as a separator (CCS), where the mass percentage of aluminum oxide ceramic in the ceramic layer was 95%.

(5) Preparation of electrode assembly: Aluminum strips were selected as positive electrode adapting tabs (one first adapting tab being the first adapting portion and the other being the second adapting portion). The first adapting portion was welded to the first metal layer of the positive electrode current collector, and the second adapting portion was welded to the second metal layer. A polyolefin hot-melt adhesive (first insulating layer) was used to bond the first metal layer of the uncoated segment, where a distance L₁ from the first adapting portion to the first insulating layer was 1 mm. Another polyolefin hot-melt adhesive was used to bond the second metal layer of the uncoated segment, where a distance L₂ from the second adapting portion to the second insulating layer was 1 mm.

Nickel strips were selected as negative electrode adapting tabs, and the negative electrode adapting tabs were directly welded to the uncoated segment of a copper foil current collector. The positive electrode sheet, the separator, and the negative electrode sheet were stacked and wound to form an electrode assembly for later use.

(6) Assembly of electrode assembly: A recess-punched aluminum-plastic film was placed in an assembly fixture with the pit facing upward, the electrode assembly was placed in the pit, and sealing members were set at the two adapting portions, with external force applied to press tightly. Another recess-punched aluminum-plastic film was placed with the pit facing downward to cover the electrode assembly. The perimeters of the two aluminum-plastic films were heat-sealed to obtain an assembled electrode assembly.

(7) Electrolyte injection and packaging: An electrolyte was injected into the assembled electrode assembly, followed by processes such as vacuum packaging, standing, hot-pressing formation, and shaping, to obtain a lithium-ion battery.

The data parameters for Examples 2 to 8 and Comparative Examples 1 to 3 are shown in Table 1 below, where:
In Comparative Example 1, only aluminum foil was used as the current collector, and a composite current collector with a polymer layer was used in the rest comparative examples and examples.

In Example 8, a mixed slurry of aluminum oxide, polyethylene, and carbon black at a weight ratio of 97.5:2:0.5 was used, first, the slurry was applied onto the first metal layer and dried to form the first coating on the first metal layer, then an active material layer slurry was applied onto the coating. The same process was repeated for the second metal layer.

### Drop test:

The lithium-ion battery was pre-treated at 25°C, left standing for 60 min in a roomtemperature environment, then the lithium-ion battery was placed in a fixture. Using a drop device, the battery was freely dropped from a height of 1.5 m above the ground in the following sequence: head-tail-head right corner-tail right corner-head left corner-tail left corner (angle: 45 ± 15°). 100 batteries were tested for each group. After the drop test, the appearance of the lithium-ion batteries was inspected. The pass criteria for the drop test were: no smoke, no fire, no electrolyte leakage, and no tearing of the tabs (the first adapting portion and the second adapting portion being the tabs).

**Table 1**

| | Whether composite current collector is used | Whether first insulating layer is included | Whether second insulating layer is included | Whether first adapting portion is included | Whether second adapting portion is included | Whether first coating and second coating are included | L₁ (mm) | L₂ (mm) | Failure rate of drop test |
|---|---|---|---|---|---|---|---|---|---|
| Comparative Example 1 | No | No | No | No | No | No | / | / | 21% |
| Comparative Example 2 | Yes | Yes | Yes | Yes | Yes | No | 1.5 | 1.5 | 15% |
| Comparative Example 3 | Yes | Yes | Yes | Yes | Yes | No | 1.2 | 1.2 | 13% |
| Example 1 | Yes | Yes | Yes | Yes | Yes | No | 1 | 1 | 8% |
| Example 2 | Yes | Yes | Yes | Yes | Yes | No | 0.8 | 0.8 | 8% |
| Example 3 | Yes | Yes | Yes | Yes | Yes | No | 0.6 | 0.6 | 7% |
| Example 4 | Yes | Yes | Yes | Yes | Yes | No | 0.5 | 0.5 | 6% |
| Example 5 | Yes | Yes | Yes | Yes | Yes | No | 0.4 | 0.4 | 5% |
| Example 6 | Yes | Yes | Yes | Yes | Yes | No | 0.2 | 0.2 | 4% |
| Example 7 | Yes | Yes | Yes | Yes | Yes | No | 0 | 0 | 5% |
| Example 8 | Yes | Yes | Yes | Yes | Yes | Yes | 0.5 | 0.5 | 5% |

According to Table 1, combining Examples 1 to 7 and Comparative Example 1, it can be seen that using a composite current collector with a polymer layer can effectively reduce the risk of lithium-ion battery failure resulting from drop tests. This is because the polymer layer serves as the mechanical performance framework of the current collector, with superior deformability and extensibility of the polymer compared to metal, allowing the first metal layer and the second metal layer to be appropriately thinned, resulting in weight reduction, improving gravimetric energy density, and reducing the risk of failure due to drop impact due to lighter weight. Additionally, the thinning of the metal layers reduces metal burrs generated when the lithium-ion battery is damaged by mechanical impact, decreasing the occurrence of burrs piercing the separator, thereby reducing the risk of internal short circuit failure in the lithium-ion battery.

Combining Examples 1 to 7 and Comparative Examples 2 and 3, it can be seen that when the distance between the first adapting portion and the first insulating layer satisfies 0 < L₁ ≤ 1 mm, and the distance between the second adapting portion and the second insulating layer satisfies 0 ≤ L₂ ≤ 1 mm, the occurrence of lithium-ion battery failure resulting from drop tests is effectively reduced. This is because the configuration of insulating layers can enhance the tear resistance of the adapting portions and the current collector, while the two insulating layers can cover the burrs of the metal layers of the uncoated segment, reducing the occurrence of burrs piercing the separator, thereby reducing short circuit. In Comparative Examples 2 and 3, the excessive distance results in some burrs not being covered, increasing the risk of burrs piercing the separator, thereby weakening the impact resistance of the lithium-ion battery.

In Example 8, compared to Example 4, the configuration of the first coating and the second coating reduces the risk of failure resulting from drop tests. This is because the two coatings can effectively protect the two metal layers of the current collector from being pierced by sharp particles of the active material layer, ensuring the integrity of the conductive network of the current collector.

In Example 9, differing from Example 8, roll welding is used to weld the first adapting portion to the second adapting portion, forming one weld mark (a welding portion) between the first adapting portion and the second adapting portion, where the weld mark is not welded to the first metal layer or the second metal layer of the positive electrode current collector. A distance between the weld mark and the first insulating layer is L₃ = 0.5 mm, and a distance between the weld mark and the second insulating layer is L7 = 0.5 mm.

The relevant parameters for Examples 10 to 20 are shown in Table 2 below.

In Example 19, a polyolefin hot-melt adhesive is used as the first adhesive layer, and the first adhesive layer covers the welding portion on the side close to the first metal layer; and the same operation is repeated on the side close to the second metal layer.

In Example 20, the first adhesive layer was connected to the first insulating layer, and the second adhesive layer was connected to the second insulating layer.

**Table 2**

| | Number of welding portions | Whether welding portion is welded to current collector | L₃ (mm) | L7 (mm) | Whether first adhesive layer and second adhesive layer are included | First adhesive layer is connected to first insulating layer | Second adhesive layer is connected to second insulating layer | Failure rate of drop test |
|---|---|---|---|---|---|---|---|---|
| Example 9 | 1 | No | 0.5 | 0.5 | No | No | No | 4% |
| Example 10 | 1 | Yes | 0.5 | 0.5 | No | No | No | 3% |
| Example 11 | 2 | No | 0.5 | 0.5 | No | No | No | 4% |
| Example 12 | 2 | Yes | 0.5 | 0.5 | No | No | No | 3% |
| Example 13 | 3 | No | 0.5 | 0.5 | No | No | No | 3% |
| Example 14 | 3 | Yes | 0.5 | 0.5 | No | No | No | 2% |
| Example 15 | 3 | Yes | 0.8 | 0.8 | No | No | No | 2% |
| Example 16 | 3 | Yes | 1 | 1 | No | No | No | 3% |
| Example 17 | 3 | Yes | 0.2 | 0.2 | No | No | No | 1% |
| Example 18 | 3 | Yes | 0 | 0 | No | No | No | 2% |
| Example 19 | 3 | Yes | 0.5 | 0.5 | Yes | No | No | 1% |
| Example 20 | 3 | Yes | 0.5 | 0.5 | Yes | Yes | Yes | 0% |

According to Table 2, combining Examples 14 to 18, it can be seen that when a distance between the welding portion and the first insulating layer or the second insulating layer is L₃ mm, where 0 ≤ L₃ ≤ 1 mm, the risk of lithium-ion battery failure resulting from drop tests is effectively reduced. This is because the configuration of roll welding marks can enhance the welding stability of the first adapting portion, the second adapting portion, and the current collector, improving impact resistance. Additionally, defining 0 ≤ L₃ ≤ 1 mm ensures that the insulating layers cover most burrs, reducing the risk of burrs piercing the separator. In addition, the configuration of welding portions can further ensure good contact between the first adapting portion and the second adapting portion, achieving dual-sided electrical connection and improving current-carrying capacity.

In Example 19, the configuration of the first adhesive layer and the second adhesive layer can reduce some burrs of the welding portion, lowering the risk of burrs piercing the separator and isolating the welding portion from the negative electrode, further reducing the risk of short circuit. In Example 20, the first adhesive layer is connected to the first insulating layer, and the second adhesive layer is connected to the second insulating layer, so that the shrinkage of the adhesive layers and insulating layers can be restricted, completely electrically isolated the exposed first metal layer and second metal layer of the uncoated segment. This not only reduces the occurrence of short circuit but also enhances the tear resistance of the uncoated segment.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. An electrode sheet, comprising:
a current collector, wherein along a thickness direction of the current collector, the current collector comprises a first metal layer, a polymer layer, and a second metal layer arranged in sequence, the first metal layer having a first surface facing away from the polymer layer, and the second metal layer having a second surface facing away from the polymer layer; and along a width direction of the current collector, the current collector comprises a coated segment and an uncoated segment connected to each other;
a first insulating layer, disposed on a side of the first surface of the first metal layer, wherein a portion of the first insulating layer is disposed on the coated segment, and another portion is disposed on the uncoated segment; and
a first adapting portion, electrically connected to the current collector on a first surface of the uncoated segment, wherein a distance between the first adapting portion and the first insulating layer is L₁ mm, and 0 mm ≤ L₁ ≤ 1 mm.

2. The electrode sheet according to claim 1, wherein the electrode sheet further comprises a second insulating layer, the second insulating layer is disposed on a side of the second surface of the second metal layer, a portion of the second insulating layer is disposed on the coated segment, and another portion is disposed on the uncoated segment; and
a second adapting portion, electrically connected to the current collector on a second surface of the uncoated segment, wherein a distance between the second adapting portion and the second insulating layer is L₂ mm, and 0 mm ≤ L₂ ≤ 1 mm.

3. The electrode sheet according to claim 2, wherein 0 mm ≤ L₁ ≤ 0.5 mm, and 0 mm ≤ L₂ ≤ 0.5 mm.

4. The electrode sheet according to claim 2 or 3, wherein the electrode sheet further comprises at least two welding portions, the welding portions are electrically connected to the first adapting portion and the second adapting portion, and at least one of the welding portions is electrically connected to the current collector.

5. The electrode sheet according to any one of claims 2 to 4, wherein along the width direction of the current collector, a distance between the welding portion and the first insulating layer or the second insulating layer is L₃ mm, 0 mm ≤ L₃ ≤ 1 mm, L₃ > L₁, and L₃ > L₂.

6. The electrode sheet according to any one of claims 1 to 5, wherein a first surface of the coated segment is provided with a first coating, the first insulating layer is bonded to the first coating and the first surface of the uncoated segment, and a first active material layer is disposed on a surface of the first coating facing away from the coated segment; and
a second surface of the coated segment is provided with a second coating, the second insulating layer is bonded to the second coating and the second surface of the uncoated segment, and a second active material layer is disposed on a surface of the second coating facing away from the coated segment.

7. The electrode sheet according to claim 6, wherein the first coating has a first section disposed close to the uncoated segment, the first section is not provided with the first active material layer, and along the width direction of the current collector, a length of the first section is L₄ mm, wherein 1 mm ≤ L₄ ≤ 1.8 mm; and
a second section of the second coating, disposed close to the uncoated segment, the second section is not provided with the second active material layer, and along the width direction of the current collector, a length of the second section is L₅ mm, wherein 1 mm ≤ L₅ ≤ 1.8 mm.

8. The electrode sheet according to claim 6, wherein the first coating and/or the second coating comprises inorganic ceramics, insulating organic polymers, and conductive particles;
the inorganic ceramics comprise at least one of aluminum oxide, boehmite, silicon dioxide, calcite, magnesite, barium sulfate, lead sulfate, calcium sulfate, or copper sulfate;
the insulating organic polymers comprise at least one of polyethylene, polypropylene, polybutene, polypentene, polyhexene, polyvinyl alcohol, polyacrylamide, polyester fiber, polyvinyl alcohol-polyester, polyethylene glycol ester, polycaprolactone, polybutylene succinate, polyether ester, polycarbonate, or rubber; and
the conductive particles comprise carbon black, graphene, or acetylene black.

9. The electrode sheet according to claim 6, wherein the electrode sheet satisfies at least one of the following conditions along the thickness direction of the current collector:
(a). a thickness of the current collector is T₁ µm, wherein 4 µm ≤ T₁ ≤ 20 µm;
(b). a thickness of the first coating is T₂ µm, wherein 0.5 µm ≤ T₂ ≤ 4 µm;
(c). a thickness of the second coating is T₃ µm, wherein 0.5 µm ≤ T₃ ≤ 4 µm;
(d). a thickness of the first adapting portion is T₄ µm, wherein 8 µm ≤ T₄ ≤ 15 µm; and
(e). a thickness of the second adapting portion is T₅ µm, wherein 6 µm ≤ T₅ ≤ 10 µm.

10. The electrode sheet according to claim 4, wherein the electrode sheet satisfies at least one of the following conditions:
(f). along the thickness direction of the current collector, a thickness of the welding portion is T₆ µm, wherein 20 µm ≤ T₆ ≤ 50 µm;
(g). along the width direction of the current collector, a width of the uncoated segment is W₁ mm, wherein 1 mm ≤ W₁ ≤ 5 mm; and
(h). along the width direction of the current collector, a width of a single welding portion is W₂ mm, wherein 1 mm ≤ W₂ ≤ 3 mm.

11. The electrode sheet according to any one of claims 4, 5, or 10, wherein the electrode sheet further comprises a first adhesive layer and a second adhesive layer;
the first adhesive layer is disposed on a surface of the first adapting portion facing away from the second adapting portion, and when viewed along a direction from the first adhesive layer to the first adapting portion, the first adhesive layer covers the welding portion; and
the second adhesive layer is disposed on a surface of the second adapting portion facing away from the first adapting portion, and when viewed along a direction from the second adhesive layer to the second adapting portion, the second adhesive layer covers the welding portion.

12. The electrode sheet according to claim 11, wherein the first adhesive layer is bonded to the first insulating layer, and the second adhesive layer is bonded to the second insulating layer.

13. The electrode sheet according to claim 11, wherein the electrode sheet satisfies at least one of the following conditions:
(i). along the width direction of the current collector, a width of the first adhesive layer is W₃ mm, wherein 1.2 mm ≤ W₃ ≤ 5 mm;
(j). along the width direction of the current collector, a width of the second adhesive layer is W₄ mm, wherein 1.2 mm ≤ W₄ ≤ 5 mm;
(k). along the thickness direction of the current collector, a thickness of the first adhesive layer is T₇ µm, wherein 5 µm ≤ T₇ ≤ 40 µm; and
(l). along the thickness direction of the current collector, a thickness of the second adhesive layer is T₈ µm, wherein 5 µm ≤ T₈ ≤ 30 µm.

14. The electrode sheet according to claim 11, wherein the first adhesive layer and/or the second adhesive layer comprises polyolefin hot-melt adhesive.

15. The electrode sheet according to claim 14, wherein along the thickness direction of the current collector, a thickness of the first insulating layer is T₉ µm, wherein 15 µm ≤ T₉ ≤ 40 µm; and a thickness of the second insulating layer is T₁₀ µm, wherein 15 µm ≤ T₁₀ ≤ 40 µm;
along the width direction of the current collector, a width of the first insulating layer is W₅ mm, wherein 1.5 mm ≤ W₅ ≤ 4 mm, and a width of the second insulating layer is W₆ mm, wherein 1.5 mm ≤ W₆ ≤ 4 mm.

16. The electrode sheet according to claim 15, wherein 0.1 mm ≤ W₅ - W₆ ≤ 0.5 mm.

17. A secondary battery, comprising the electrode sheet according to any one of claims 1 to 16.
